# EUROPEAN PATENT SPECIFICATION

(11) **EP 4 254 531 B1**
(45) Date of publication and mention of the grant of the patent: **21.05.2025**
(21) Application number: 22865033.9
(22) Date of filing: 31.08.2022
(51) Int. Cl.: B65H 27/00, H01M 4/04, H01M 10/04, H01M 50/531

(54) **ELECTRODE DRIVING ROLLER AND NOTCHING APPARATUS COMPRISING SAME**
ELEKTRODENANTRIEBSROLLE UND KERBUNGSVORRICHTUNG DAMIT
ROULEAU D'ENTRAÎNEMENT D'ÉLECTRODE ET APPAREIL D'ENTAILLAGE LE COMPRENANT

(30) Priority: 31.08.2021 KR 20210115349; 30.08.2022 KR 20220109300
(43) Date of publication of application: 04.10.2023
(73) Proprietor: LG Energy Solution, Ltd., Seoul 07335 (KR)
(72) Inventor: LEE, Younghak, Daejeon 34122 (KR); KIM, Jun Wan, Daejeon 34122 (KR); LEE, Hak Sik, Daejeon 34122 (KR)
(74) Representative: Plasseraud IP
(86) International application number: PCT/KR2022/013005
(87) International publication number: WO 2023/033531

(56) References cited:
- JP-A- 2004 327 177
- JP-A- 2004 327 177
- JP-A- 2008 173 590
- JP-A- 2008 173 590
- JP-A- 2014 123 491
- KR-A- 20160 076 139
- KR-A- 20200 104 598
- KR-A- 20220 093 600

## Description

### [Technical Field]

The present application claims the benefit of priority based on Korean Patent Application Nos. 10-2021-0115349 filed August 31, 2021, and 10-2022-0109300 filed on August 30, 2022.

The present invention relates to an electrode running roller and a notching device comprising the same.

### [Background Art]

With increasing technological development and demand for mobile devices, a rechargeable secondary battery is widely used as energy sources for various mobile devices. In addition, the secondary battery is attracting attention as an energy source for an electric vehicle, a hybrid vehicle and the like, which are proposed as a solution to air pollution caused by existing a gasoline vehicle and a diesel vehicle.

The secondary battery is classified into a coin-shaped battery, a cylindrical battery, a prismatic battery, and a pouch-shaped battery according to the shape of the battery case in which the electrode assembly is incorporated. In general, the electrode assembly incorporated in the battery case is classified into a jelly-roll type in which a separation membrane is interposed and wound up between an anode and a cathode, a stack type in which a plurality of unit cells with the separation membrane interposed between the anode and the cathode are stacked, and a stack/folding type in which the unit cells are wound with a separation film.

Such a secondary battery can be manufactured by coating an electrode mixture, which is a mixture of an electrode active material, a conductive material, a binder, etc., on an electrode current collector and then drying it to manufacture an electrode, laminating the manufactured electrode together with the separation membrane to form an electrode assembly, and then embedding and sealing in a battery case together with an electrolyte. The electrode assembly is classified into a stack type, a folding type, a stack-folding type, etc. depending on the manufacturing methods. In the case of a stack type or stack-folding type electrode assembly, the unit assemblies have a structure in which an anode and a cathode are sequentially laminated with a separation film interposed therebetween. In order to manufacture such an electrode assembly, it is first necessary to manufacture the anode and the cathode having electrode tabs formed thereon.

That is, in order to manufacture a unit electrode having electrode tabs, first, a notching process is required to form the electrode tabs on a continuous electrode sheet coated with an electrode active material on one or both sides thereof. The notching process generally consists of a process of placing an electrode sheet on a die and punching out a part of the electrode sheet using a press. Here, the electrode sheets are conveyed by running rollers that run in synchronism with the operation of the press, and are sequentially punched to form electrode tabs.

The surface of the electrode sheet is made up of a coating portion coated with an electrode active material, and a non-coating portion coated with no electrode active material, and the running roller is formed in a cylindrical shape. The electrode sheet moves in close contact with an outer peripheral surface of the running roller. When the electrode sheet runs on the electrode running roller, since the coating portion and the non-coating portion on the surface of the electrode sheet have different coefficients of friction, a difference occurs in a tension with the electrode running roller. Therefore, there are problems such as breakage of the non-coating portion and breakage at the boundary between the coating portion and the non-coating portion.

Therefore, there is a great need for a technology that can solve the above problems.

### [Prior Art Documents]

Further prior art is disclosed in KR 10-1759570 A, JP 2004 327177 A and JP 2008 173590 A.

### [Disclosure]

### [Technical Problem]

An object of the present invention is to provide an electrode running roller that can solve the problem of occurrence of breakage at the boundary between a coating portion and a non-coating portion of an electrode sheet, when the electrode sheet is conveyed by the electrode running roller.

Another object of the present invention is to provide a notching device comprising the electrode running roller.

### [Technical Solution]

In order to achieve the above object, the present invention provides an electrode running roller designed to cause an electrode sheet including a current collector which is coated with an electrode active material to run,
wherein the electrode running roller comprises a cylindrical section, and a tapered section extending from one end portion of the cylindrical section, and
the tapered section has a shape in which an outer diameter gradually decreases toward a distal end portion of the tapered section,
wherein the tapered section forms an outer peripheral surface inclined at an angle of 0.2 to 0.5 degrees toward a central axis on the basis of an outer peripheral surface of the cylindrical section.

In an embodiment of the invention, a ratio of the length of the cylindrical section to a length of the tapered section may be 4:1 to 1:1.

In an embodiment of the invention, the tapered section may have a truncated conical form.

In an embodiment of the present invention, the electrode sheet may have a coating portion coated with an electrode active material, and a non-coating portion not coated with the electrode active material, and
the electrode running roller may be dimensioned such that the non-coating portion is positioned in the tapered section of the electrode running roller.

In an embodiment of the present invention, the electrode running roller may be dimensioned such that the coating portion of the electrode sheet extends up to a boundary between the cylindrical section and the tapered section of the electrode running roller.

In an embodiment of the present invention, the cylindrical section of the running roller may be dimensioned such that a portion of the electrode sheet, except the non-coating portion, may be in contact with the outer peripheral surface of the cylindrical section.

Also, the present invention provides a notching device for forming an electrode tab on a continuous electrode sheet in which an electrode active material is coated on one side or both sides of a current collector in a manufacturing process of a battery cell.

The notching device comprises:
a press which punches the electrode sheet so that the electrode tab may be formed on a part of the electrode sheet;
a die formed with an opening having a shape corresponding to the press so that a scrap punched by the press can be discharged; and
the electrode running roller of the present invention which conveys the electrode sheet to the press in synchronization with the operation of the press.

### [Advantageous Effects]

The electrode running roller of the present invention includes a tapered section extending from one side end of a cylindrical section, and by disposing the non-coating portion of the electrode sheet in the tapered section, it is possible to reduce breakages that occur at the boundary between the coating portion and the non-coating portion of the electrode sheet when the electrode is running.

### [Description of Drawings]

FIG. 1 is a perspective view showing an electrode running roller according to an embodiment of the present invention.
FIG. 2 is a cross-sectional view of the electrode sheet.
FIG. 3 is a perspective view showing a conventional electrode running roller.
FIG. 4 is a perspective view showing a state in which electrode running rollers are applied according to an embodiment of the present invention.
FIG. 5 is a front view showing a notching device including the electrode running rollers according to an embodiment of the present invention.
FIG. 6 is a graph showing measured maximum effective stresses of electrode running rollers of Examples 1 to 4 and Comparative Examples 1 to 3.

### [Best Mode]

Hereinafter, the present invention will be described in detail based on the accompanying drawings so that a person having ordinary knowledge in the technical field to which the present invention belongs can easily carry it out. This invention may, however, be embodied in many different forms and is not limited to the embodiments set forth herein.

In order to clearly describe the present invention, parts irrelevant to the description are omitted, and the same or similar components are denoted by the same reference numerals throughout the specification.

Furthermore, terms or words used in the specification and claims should not be construed as being limited to its customary or dictionary meaning, and should be interpreted by the inventors as a meaning and concept consistent with the technical idea of the present invention, based on the principle that the concepts of the terms can be properly defined to describe their invention in the best possible manner.

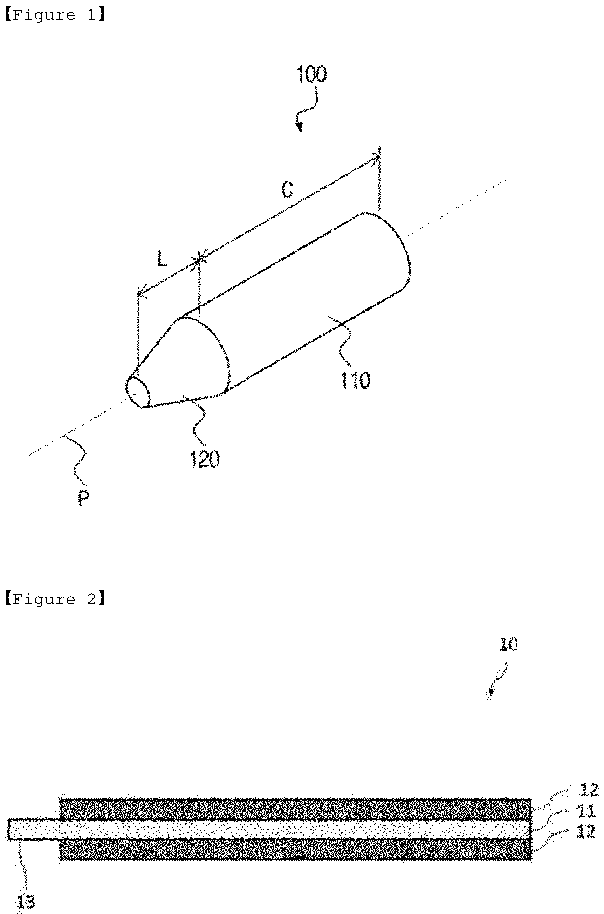

FIG. 1 is a perspective view showing an electrode running roller according to an embodiment of the present invention.

Referring to FIG. 1, an electrode running roller 100 according to an embodiment of the present invention is an electrode running roller 100 which causes an electrode sheet 10 in which a current collector 11 is coated with an electrode active material to run, and the electrode running roller 100 includes a cylindrical section 110 and a tapered section 120 extending from one end portion of the cylindrical section 110. The tapered section 120 is configured such that the outer diameter gradually decreases toward the distal end portion of the tapered section 120.

Here, referring to FIG. 2, the electrode sheet 10 includes a coating portion 12 coated with an electrode active material on one side or both sides of a current collector 11 and a non-coating portion 13 not coated with the electrode active material.

Specifically, the coating portion 12 of the electrode sheet 10 is continuously coated with the electrode active material along the running direction of the electrode running roller 100. Further, the non-coating portion 13 may not be coated with the electrode active material on the side portion in the running direction of the electrode running roller 100.

Further, in the electrode running roller 100, the non-coating portion 13 of the electrode sheet 10 is disposed to be positioned in the tapered section 120 of the electrode running roller 100.

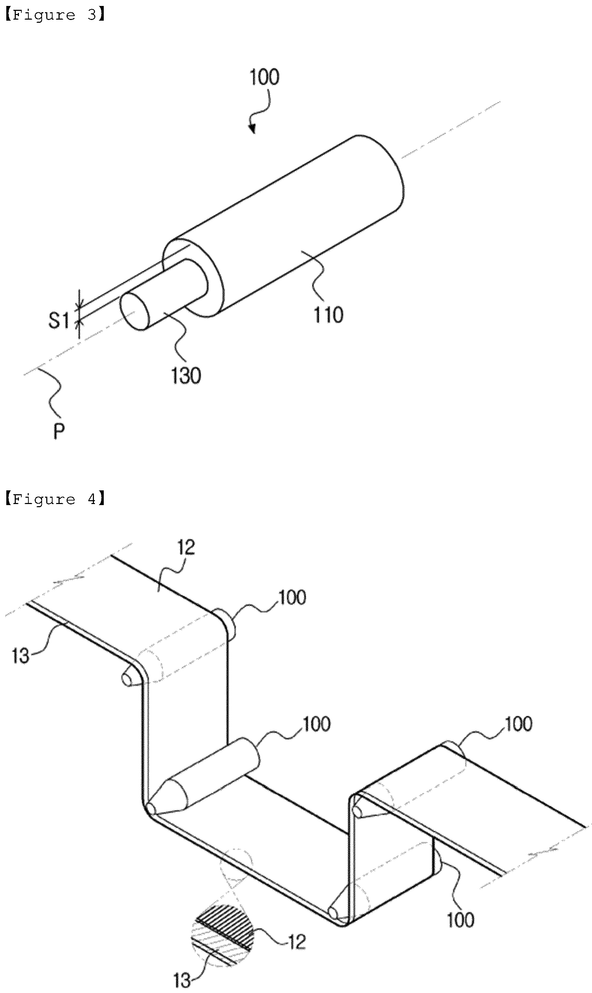

FIG. 3 is a perspective view showing an electrode running roller according to a conventional embodiment.

Referring to FIG. 3, the conventional electrode running roller 100 includes a cylindrical section 110 and a variable section 130 having a smaller diameter than the cylindrical section 110 so that a step S1 is formed on the outer peripheral surface of the cylindrical section.

At this time, the coating portion 12 of the electrode sheet 10 can be disposed at a position where it is in contact with the outer peripheral surface of the cylindrical section 110, and the non-coating portion 13 can be disposed to be positioned in the variable section 130 of the electrode running roller 100. In addition, the boundary between the coating portion 12 and the non-coating portion 13 can be in contact with the outer peripheral surface of the cylindrical section 110. Therefore, when the electrode running roller 100 runs, because the cylindrical section 110 directly abuts on the boundary between the coating portion 12 and the non-coating portion 13 and acts as an external force, the effect of blocking and dispersing stress is minimal. Therefore, when the electrode sheet 10 is conveyed by the electrode running roller 100, there is a problem that the electrode sheet 10 is broken.

Therefore, the present invention attempts to solve the above problem by providing the electrode running roller 100 comprising the tapered section 120 extending from one side end portion of the cylindrical section 110.

Hereinafter, the electrode running roller 100, which is an embodiment of the present invention, will be described in more detail with reference to FIG. 1.

In an embodiment of the invention, the ratio of the length (C) of the cylindrical section and the length (L) of the tapered section may be between 4:1 and 1:1, preferably between 3:2 and 7:3. Since it is possible to reduce the stress generated at the boundary between the coating portion 12 and the non-coating portion 13 of the electrode sheet 10. Within the above ratio range, occurrence of the breakage of the electrode sheet 10 can be prevented. Specifically, if the maximum effective stress generated at the boundary between the coating portion 12 and the non-coating portion 13 of the electrode sheet 10 is 50 MPa or more, the electrode sheet 10 may break. However, if the ratio of the length C of the cylindrical section to the length L of the tapered section is 4:1 to 1:1, the maximum effective stress generated at the boundary between the coating portion 12 and the non-coating portion 13 of the electrode sheet 10 is less than 50 MPa, and it is possible to solve the problem of breakage of the electrode sheet 10 accordingly. If the ratio of the length C of the cylindrical section to the length L of the tapered section is out of the range of 4:1 to 1:1, the stress is generated at 50 MPa or more, and the effect of improving the breakage problem generated in the electrode sheet 10 is low.

Also, in an embodiment of the present invention, the tapered section 120 has a truncated conical shape, and forms an outer peripheral surface that is inclined at an angle of 0.2 to 0.5 degrees, preferably, an angle of 0.25 to 0.35 degrees, toward the central axis P. In the above angle range, the contact between the non-coating portion 13 of the electrode sheet 10 and the tapered section 120 can be minimized, and the breakage of the electrode sheet 10 can be prevented.

FIG. 4 is a perspective view showing a state in which electrode running rollers according to an embodiment of the present invention are applied.

Referring to FIG. 4, in the electrode running roller 100 according to an embodiment of the present invention, the non-coating portion 13 of the electrode sheet 10 is positioned in the tapered section 120, and in the electrode running roller 100, the coating portion 12 of the electrode sheet 10 can be disposed at the boundary between the cylindrical section 110 and the tapered section 120. In addition, in the electrode sheet 10, the portion except for the non-coating portion 13 can be in contact with the outer peripheral surface of the cylindrical section 110.

Therefore, in the electrode running roller 100 according to the embodiment of the present invention configured as described above, by forming the tapered section 120 at one end portion of the cylindrical section 110 in which the electrode sheet 10 is in close contact with the outer peripheral surface when the electrode sheet 10 runs, since the portion of the electrode sheet 10 except for the non-coating portion 13 not coated with the electrode active material can be brought into close contact with the outer peripheral surface of the cylindrical section 110, it is possible to prevent breakage that occurs in the boundary between the non-coating portion 13 and the coating portion 12.

Hereinafter, a notching device according to an embodiment of the present invention will be described below.

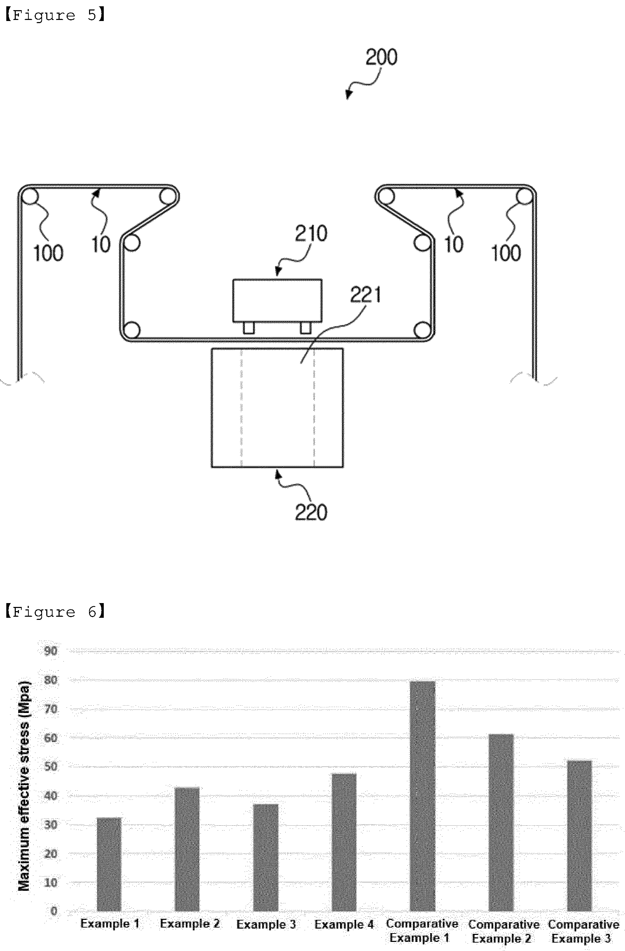

FIG. 5 is a front view showing a notching device comprising the electrode running rollers according to an embodiment of the present invention.

Referring to FIG. 5**,** a notching device 200 according to an embodiment of the present invention comprises electrode running rollers 100 which causes the electrode sheet 10 to run.

More specifically, the notching device 200 according to an embodiment of the present invention is made up of a press 210, a die 220 and an electrode running roller 100, and the continuous electrode sheet 10, in which the electrode active material is applied to one or both sides of a current collector, runs on the electrode running roller 100 of the notching device 200.

The press 210 punches the electrode sheet 10 at regular intervals so that electrode tabs are formed on the electrode sheet 10, and the electrode running roller 100 functions to convey the electrode sheet 10 by the press 210 in synchronization with the operation of the press 210.

Further, the die 220 is formed with an opening 221 having a shape corresponding to the press 210 so that scrap punched by the press 210 can be discharged.

The electrode running roller 100 is according to an embodiment of the present invention described above.

It is clear to those skilled in the art that various changes and modifications can be made within the scope of the present invention, and it goes without saying that such variations and modifications fall within the scope of the appended claims.

### [Description of symbols]

10: Electrode sheet, 11: Current collector
12: Coating portion, 13: Non-coating portion
100: Electrode running roller, 110: Cylindrical section
120: Tapered section, 130: Variable section
200: Notching device, 210: Press
220: Die, 221: Opening

## Claims

1. An electrode running roller (100) designed to cause an electrode sheet (10) including a current collector (11) which is coated with an electrode active material to run,
wherein the running roller (100) comprises a cylindrical section (110), and a tapered section (120) extending from one end portion of the cylindrical section (110), and
the tapered section (120) has a shape in which an outer diameter gradually decreases toward a distal end portion of the tapered section (120),
**characterized in that** the tapered section (120) forms an outer peripheral surface inclined at an angle of 0.2 to 0.5 degrees toward a central axis (P) on the basis of an outer peripheral surface of the cylindrical section (110).

2. The electrode running roller (100) according to claim 1,
wherein a ratio of a length (C) of the cylindrical section to a length (L) of the tapered section is 4:1 to 1:1.

3. The electrode running roller (100) according to claim 1,
wherein the tapered section (120) has a truncated conical form.

4. The electrode running roller (100) according to claim 1,
wherein the electrode sheet (10) includes a coating portion (12) coated with an electrode active material, and a non-coating portion (13) not coated with the electrode active material, and
the electrode running roller (100), when in use, is disposed such that the non-coating portion (13) is positioned in the tapered section (120) of the electrode running roller (100).

5. The electrode running roller (100) according to claim 4,
wherein the electrode running roller (100), when in use, is disposed such that the coating portion (12) of the electrode sheet (10) is positioned at a boundary between the cylindrical section (110) and the tapered section (120) of the electrode running roller (100).

6. The electrode running roller (100) according to claim 4, wherein, when in use, a portion of the electrode sheet (10), except the non-coating portion (13), is in contact with the outer peripheral surface of the cylindrical section (110).

7. A notching device (200) for forming an electrode tab on a continuous electrode sheet (10) in which an electrode active material is coated on one side or both sides of a current collector (11) in a manufacturing process of a battery cell, the notching device (200) comprising:
a press (210) which punches the electrode sheet (10) so that the electrode tab is formed on a part of the electrode sheet (10);
a die (220) formed with an opening (221) having a shape corresponding to the press (210) so that a scrap punched by the press (210) can be discharged; and
the electrode running roller (100) according to any one of claims 1 to 6 which conveys the electrode sheet (10) to the press (210) in synchronization with the operation of the press (210).

## Patentansprüche

1. Elektroden-Laufrolle (100), welche dazu ausgelegt ist, eine Elektrodenbahn (10), welche einen Stromsammler (11) umfasst, welcher mit einem aktiven Elektrodenmaterial beschichtet ist, zu einem Laufen zu veranlassen,
wobei die Laufrolle (100) einen zylindrischen Abschnitt (110) und einen zulaufenden Abschnitt (120) umfasst, welcher sich von einem Endbereich des zylindrischen Abschnitts (110) erstreckt, und
der zulaufende Abschnitt (120) eine Form aufweist, in welcher ein äußerer Durchmesser in Richtung eines distalen Endbereichs des zulaufenden Abschnitts (120) graduell abnimmt,
**dadurch gekennzeichnet, dass** der zulaufende Abschnitt (120) eine äußere Umfangsfläche bildet, welche bei einem Winkel von 0,2 bis 0,5 Grad in Richtung einer zentralen Achse (P) auf Grundlage einer äußeren Umfangsfläche des zylindrischen Abschnitts (110) geneigt ist.

2. Elektroden-Laufrolle (100) nach Anspruch 1, wobei ein Verhältnis einer Länge (C) des zylindrischen Abschnitts zu einer Länge (L) des zulaufenden Abschnitts 4:1 bis 1:1 beträgt.

3. Elektroden-Laufrolle (100) nach Anspruch 1, wobei der zulaufende Abschnitt (120) eine Kegelstumpf-Form aufweist.

4. Elektroden-Laufrolle (100) nach Anspruch 1, wobei die Elektrodenbahn (10) einen Beschichtungsbereich (12) umfasst, welcher mit einem aktiven Elektrodenmaterial beschichtet ist, sowie einen nicht-beschichteten Bereich (13), welcher nicht mit dem aktiven Elektrodenmaterial beschichtet ist, und
die Elektroden-Laufrolle (100), wenn sie in Verwendung ist, derart angeordnet ist, dass der nicht-beschichtete Bereich (13) in dem zulaufenden Abschnitt (120) der Elektroden-Laufrolle (100) positioniert ist.

5. Elektroden-Laufrolle (100) nach Anspruch 4, wobei die Elektroden-Laufrolle (100), wenn sie in Verwendung ist, derart angeordnet ist, dass der Beschichtungsbereich (12) der Elektrodenbahn (10) an einem Übergang zwischen dem zylindrischen Abschnitt (110) und dem zulaufenden Abschnitt (120) der Elektroden-Laufrolle (100) positioniert ist.

6. Elektroden-Laufrolle (100) nach Anspruch 4, wobei, wenn sie in Verwendung ist, ein Bereich der Elektrodenbahn (10), ausgenommen den nicht-beschichteten Bereich (13) in Kontakt mit der äußeren Umfangsfläche des zylindrischen Abschnitts (110) ist.

7. Kerbungsvorrichtung (200) zum Bilden eines Elektrodenstreifens an einer kontinuierlichen Elektrodenbahn (10), in welcher ein aktives Elektrodenmaterial an eine Seite oder beide Seiten eines Stromsammlers (11) in einem Herstellungsprozess einer Batteriezelle beschichtet wird, die Kerbungsvorrichtung (200) umfassend:
eine Presse (210), welche die Elektrodenbahn (10) derart stanzt, dass der Elektrodenstreifen an einem Teil der Elektrodenbahn (10) gebildet wird;
eine Form (220), welche mit einer Öffnung (221) gebildet ist, welche eine Form aufweist, welche der Presse (210) entspricht, so dass ein Stanzabfall, welcher durch die Presse (210) gestanzt wird, abgegeben werden kann; und
die Elektroden-Laufrolle (100) nach einem der Ansprüche 1 bis 6, welche die Elektrodenbahn (10) zu der Presse (210) in Synchronisation mit dem Betrieb der Presse (210) zuführt.

## Revendications

1. Rouleau de roulement d'électrode (100) conçu pour faire passer une feuille d'électrode (10) comportant un collecteur de courant (11) qui est revêtu d'un matériau actif d'électrode,
dans lequel le rouleau de roulement (100) comprend une section cylindrique (110), et une section conique (120) s'étendant à partir d'une portion d'extrémité de la section cylindrique (110), et
la section conique (120) présente une forme dans laquelle un diamètre extérieur diminue progressivement vers une portion d'extrémité distale de la section conique (120),
**caractérisé en ce que** la section conique (120) forme une surface périphérique extérieure inclinée à un angle de 0,2 à 0,5 degré vers un axe central (P) sur la base d'une surface périphérique extérieure de la section cylindrique (110).

2. Rouleau de roulement d'électrode (100) selon la revendication 1,
dans lequel un rapport d'une longueur (C) de la section cylindrique sur une longueur (L) de la section conique est de 4:1 à 1:1.

3. Rouleau de roulement d'électrode (100) selon la revendication 1,
dans lequel la section conique (120) présente une forme conique tronquée.

4. Rouleau de roulement d'électrode (100) selon la revendication 1,
dans lequel la feuille d'électrode (10) comporte une portion de revêtement (12) revêtue d'un matériau actif d'électrode, et une portion sans revêtement (13) non revêtue du matériau actif d'électrode, et
le rouleau de roulement d'électrode (100), lorsqu'il est utilisé, est disposé de sorte que la portion sans revêtement (13) soit positionnée dans la section conique (120) du rouleau de roulement d'électrode (100).

5. Rouleau de roulement d'électrode (100) selon la revendication 4,
dans lequel le rouleau de roulement d'électrode (100), lorsqu'il est utilisé, est disposé de sorte que la portion de revêtement (12) de la feuille d'électrode (10) soit positionnée à une limite entre la section cylindrique (110) et la section conique (120) du rouleau de roulement d'électrode (100).

6. Rouleau de roulement d'électrode (100) selon la revendication 4,
dans lequel, lorsqu'il est utilisé,
une portion de la feuille d'électrode (10), à l'exception de la portion sans revêtement (13), est en contact avec la surface périphérique extérieure de la section cylindrique (110).

7. Dispositif d'entaillage (200) pour former une languette d'électrode sur une feuille d'électrode (10) continue dans lequel un matériau actif d'électrode est revêtu d'un côté ou des deux côtés d'un collecteur de courant (11) dans un processus de fabrication d'une cellule de batterie, le dispositif d'entaillage (200) comprenant :
une presse (210) qui poinçonne la feuille d'électrode (10) de sorte que la languette d'électrode soit formée sur une partie de la feuille d'électrode (10) ;
une matrice (220) formée avec une ouverture (221) ayant une forme correspondant à la presse (210) de sorte qu'un rebut poinçonné par la presse (210) puisse être évacué ; et
le rouleau de roulement d'électrode (100) selon l'une quelconque des revendications 1 à 6 qui transporte la feuille d'électrode (10) vers la presse (210) en synchronisation avec le fonctionnement de la presse (210).
